# EUROPÄISCHE PATENTSCHRIFT

(11) **EP 3 049 278 B1**
(45) Veröffentlichungstag und Bekanntmachung des Hinweises auf die Patenterteilung: **10.01.2018**
(21) Anmeldenummer: 14776617.4
(22) Anmeldetag: 23.09.2014
(51) Int. Cl.: B60N 2/36, B60N 2/015, B60N 2/68, E05B 79/04, E05B 79/08, F16B 5/04, F16B 19/04, F16B 19/10

(54) **VERRIEGELUNGSEINHEIT FÜR EINEN FAHRZEUGSITZ UND FAHRZEUGSITZ**
LOCKING UNIT FOR A VEHICLE SEAT AND VEHICLE SEAT
UNITÉ DE VERROUILLAGE POUR SIÈGE DE VÉHICULE ET SIÈGE DE VÉHICULE

(30) Priorität: 26.09.2013 DE 102013219409
(43) Veröffentlichungstag der Anmeldung: 03.08.2016
(73) Patentinhaber: Adient Luxembourg Holding S.à r.l., 2453 Luxembourg (LU)
(72) Erfinder: VEDDER, Andreas, 42781 Haan (DE); LEHMANN, Ulrich, 53347 Alfter (DE); MUELLER, Peter, 67686 Mackenbach (DE)
(74) Vertreter: Liedhegener, Ralf
(86) Internationale Anmeldenummer: PCT/EP2014/070197
(87) Internationale Veröffentlichungsnummer: WO 2015/044114

(56) Entgegenhaltungen:
- WO-A1-01/76907
- DE-A1- 10 227 089

## Beschreibung

Die Erfindung betrifft eine Verriegelungseinheit für einen Fahrzeugsitz mit den Merkmalen des Oberbegriffs des Anspruchs 1. Die Erfindung betrifft auch einen Fahrzeugsitz mit den Merkmalen des Anspruchs 12.

### Stand der Technik

Aus der DE 10 2008 051 832 A1 ist eine gattungsgemäße Verriegelungseinheit für einen Fahrzeugsitz bekannt. Eine derartige Verriegelungseinheit umfasst eine um eine Schwenkachse schwenkbar gelagerte Drehfalle zum Verriegeln mit einem Verriegelungsbolzen. Eine um eine andere Schwenkachse schwenkbar gelagerte Rastklinke sichert die Drehfalle im verriegelten Zustand. Ein als Toleranzausgleichsklinke bezeichnetes, schwenkbar gelagertes Spannelement übt auf die Drehfalle ein schließendes Moment aus und eliminiert auf diese Art zwischen der Drehfalle und dem Verriegelungsbolzen vorhandenes Spiel.

Die Rastklinke und das Spannelement sind um dieselbe Achse schwenkbar und axial versetzt nebeneinander auf einem Lagerbolzen angeordnet und wirken mit der Drehfalle zusammen. Die Drehfalle ist auf einem anderen Lagerbolzen gelagert. Die beiden Lagerbolzen sind annähernd hohlzylindrisch ausgestaltet und parallel versetzt zueinander angeordnet. Die Mittelachsen der Lagerbolzen fluchten mit den besagten Schwenkachsen. Die Lagerbolzen sind an Seitenteilen eines Gehäuses der Verriegelungseinheit befestigt.

Mittels Schrauben, welche Lagerbohrungen der Seitenteile sowie die Lagerbolzen durchragen und in entsprechende Befestigungsbohrungen an der Struktur des Fahrzeugsitzes eingeschraubt sind, ist die Verriegelungseinheit an dem Fahrzeugsitz befestigt. Die Mittelachsen der Schrauben fluchten dabei mit den Mittelachsen der Lagerbolzen sowie mit den Mittelachsen der Befestigungsbohrungen.

Der Abstand der Mittelachsen der Befestigungsbohrungen zueinander wird als Stichmaß bezeichnet. Damit die Verriegelungseinheit an dem Fahrzeugsitz befestigbar ist muss der Abstand der Mittelachsen der Lagerbolzen zueinander dem Stichmaß an der Struktur des Fahrzeugsitzes entsprechen. Soll die Verriegelungseinheit an einem anderen Fahrzeugsitz mit unterschiedlichem Stichmaß befestigt werden, so ist die Verrieglungseinheit an dieses Stichmaß anzupassen.

Aus der DE 102 27 089 A1 ist eine Verriegelungsvorrichtung für einen Fahrzeugsitz bekannt, welche eine um einen Klinkenbolzen schwenkbare Sperrklinke, ein zum Zusammenwirken mit der Sperrklinke vorgesehenes Gegenelement und einen Lagerbolzen mit einem Exzenterabschnitt aufweist. Dabei ist eine die Mitte des Exzenterabschnitts bildende Exzentermitte exzentrisch versetzt zur Mittelachse des Lagerbolzens angeordnet. Ferner ist ein um den Exzenterabschnitt schwenkbares Fangstück vorgesehen, welches mittels einer Fangfläche die Sperrklinke im Crashfall abstützt. Eine Normale der Fangfläche verläuft hierbei im Abstand zur Exzentermitte.

### Aufgabe

Der Erfindung liegt die Aufgabe zu Grunde, eine Verriegelungseinheit der eingangs genannten Art zu verbessern, insbesondere eine Anpassung an verschiedene Stichmaße zu ermöglichen.

### Lösung

Diese Aufgabe wird erfindungsgemäß durch eine Verriegelungseinheit für einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Eine gattungsgemäße Verriegelungseinheit für einen Fahrzeugsitz umfasst ein Gehäuse mit mindestens einer Seitenplatte und vorzugsweise mit mindestens einer Abdeckplatte, sowie mindestens einen Lagerbolzen mit einer Lagerachse, welcher in axialer Richtung von einer Durchgangsöffnung mit einer Durchgangsachse durchdrungen ist, wobei die Durchgangsachse der Durchgangsöffnung versetzt, insbesondere in radialer Richtung versetzt, zu der Lagerachse des Lagerbolzens verläuft, wobei der Lagerbolzen in eine erste Lagerbohrung der Seitenplatte und vorzugsweise in eine zweite Lagerbohrung der Abdeckplatte eingesetzt ist. Erfindungsgemäß ist dabei vorgesehen dass die Seitenplatte an dem Rand der ersten Lagerbohrung mindestens einen Einpressbereich aufweist, in welchen durch eine Verpressung Material des Lagerbolzens hinein fließt. Dadurch kann durch eine Drehung des Lagerbolzens um seine Lagerachse auf verhältnismäßig einfache Art eine Anpassung der Verriegelungseinheit an verschiedene Stichmaße erreicht werden. Somit können Verriegelungseinheiten mit verschiedenen Stichmaßen mit weitgehend identischen Bauteilen produziert werden. Der Aufwand für Produktion und Lagerhaltung von mehreren verschiedenen Bauteilen zur Anpassung der Verriegelungseinheit an unterschiedliche Stichmaße ist somit verringert.

Vorzugsweise verläuft die Durchgangsachse parallel zu der Lagerachse, beziehungsweise parallel versetzt zu der Lagerachse. Dadurch ist die Durchgangsöffnung fertigungstechnisch einfacher einzubringen als wenn die Durchgangsöffnung geneigt zu der Lagerachse verläuft.

Vorteilhaft weist der Lagerbolzen außen eine zu seiner Lagerachse zumindest annähernd rotationssymmetrische Kontur auf. Dies gestattet eine schwenkbare Lagerung eines Bauteils, insbesondere einer Drehfalle, einer Rastklinke oder eines Spannelements auf dem Lagerbolzen.

Vorteilhaft weist die Durchgangsöffnung eine zu ihrer Durchgangsachse zumindest annähernd rotationssymmetrische Kontur auf. Dadurch kann die Durchgangsöffnung ein Befestigungsmittel, beispielsweise eine Schraube, aufnehmen, mittels welchem die Verriegelungseinheit an einem Strukturteil befestigbar ist.

Vorzugsweise weist die Durchgangsöffnung eine kreiszylindrische Kontur auf, welche fertigungstechnisch verhältnismäßig einfach durch Einbringen einer Bohrung herstellbar ist.

Bevorzugt umfasst die Verriegelungseinheit zwei Lagerbolzen, wobei jeder Lagerbolzen in eine erste Lagerbohrung der Seitenplatte und in eine zweite Lagerbohrung der Abdeckplatte eingesetzt ist.

Gemäß einer bevorzugten Ausführungsform besteht die Seitenplatte zumindest vorwiegend aus Metall, wodurch die Festigkeit der Verriegelungsvorrichtung erhöht ist. Nach der Erfindung weist die Seitenplatte an dem Rand der ersten Lagerbohrung mindestens einen Einpressbereich auf, in welchen durch eine Verpressung Material des Lagerbolzens hinein fließt. Durch eine rotatorische Ausrichtung des Lagerbolzens in der ersten Lagerbohrung ist somit eine stufenlose Anpassung an ein Stichmaß möglich. Durch die anschließende Verpressung findet eine Fixierung des Lagerbolzens an der Seitenplatte und damit eine Einstellung auf das Stichmaß statt.

Gemäß einer Weiterbildung der Erfindung weist die Seitenplatte am Rand der ersten Lagerbohrung bevorzugt eine Mehrzahl an Einpressbereichen auf. Hierbei kann es ferner von Vorteil sein, wenn jeder Einpressbereich den maximalen Abstand zum jeweiligen benachbarten Einpressbereich aufweist.

Gemäß einer weiter bevorzugten Ausführungsform ist die Mehrzahl an Einpressbereichen entlang des Randes der ersten Lagerbohrung gleichverteilt positioniert.

Gemäß einer bevorzugten Ausführungsform besteht die Abdeckplatte zumindest vorwiegend aus Kunststoff, wodurch das Gewicht der Verriegelungsvorrichtung verringert ist.

Gemäß einer weiteren vorteilhaften Weiterbildung der Erfindung weist die Abdeckplatte an dem Rand der zweiten Lagerbohrung mindestens eine Nut auf, in welche ein Zapfen des Lagerbolzens eingreift. Durch Wahl der Lage der Nut bei der Produktion der Abdeckplatte ist damit das Stichmaß vorgebbar. Eine fehlerhafte Fertigung der Verriegelungseinheit bedingt durch eine fehlerhafte Ausrichtung des Lagerbolzens in der zweiten Lagerbohrung ist damit ausgeschlossen.

Die Aufgabe wird auch durch einen Fahrzeugsitz mit den im Anspruch 12 genannten Merkmalen gelöst, welcher mindestens eine Verriegelungseinheit nach einem der vorstehenden Ansprüche umfasst.

### Figuren und Ausführungsformen der Erfindung

Im Folgenden ist die Erfindung anhand von einem in den Zeichnungen dargestellten vorteilhaften Ausführungsbeispiel sowie einer Abwandlung des Ausführungsbeispiels näher erläutert. Die Erfindung ist jedoch nicht auf dieses Ausführungsbeispiel beschränkt. Es zeigen:
- Fig. 1:: eine Explosionsdarstellung einer gattungsgemäßen Verriegelungseinheit gemäß dem Stand der Technik,
- Fig. 2:: eine Seitenansicht einer gattungsgemäßen Verriegelungseinheit gemäß dem Stand der Technik,
- Fig. 3:: eine Seitenansicht einer erfindungsgemäßen Verriegelungseinheit mit Anpassung an maximales Stichmaß,
- Fig. 4:: eine Seitenansicht einer erfindungsgemäßen Verriegelungseinheit mit Anpassung an minimales Stichmaß,

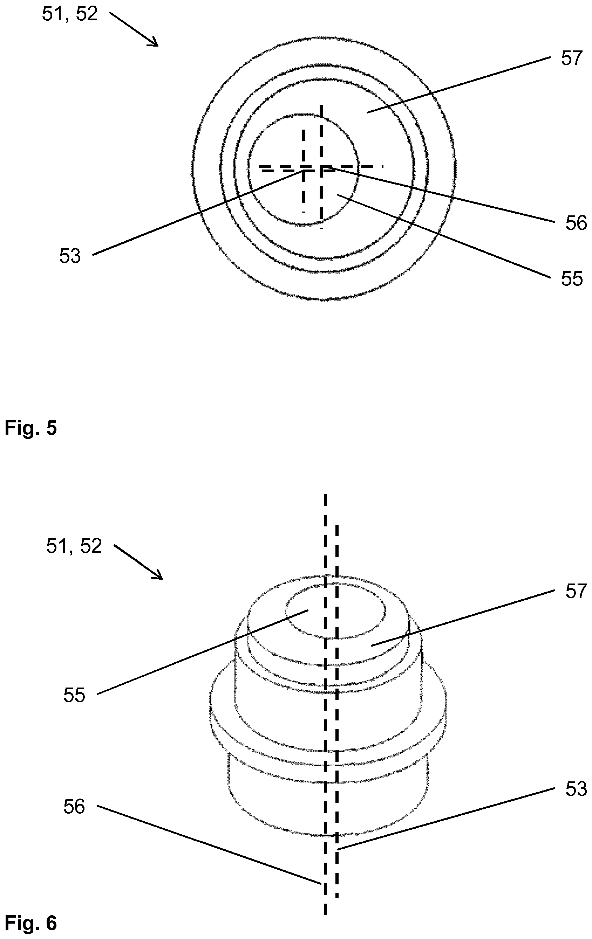

- Fig. 5:: eine Draufsicht auf einen Lagerbolzen einer erfindungsgemäßen Verriegelungseinheit,
- Fig. 6:: eine perspektivische Darstellung des Lagerbolzens nach Fig. 5,
- Fig. 7:: eine vergrößerte Darstellung einer Seitenplatte mit eingepresstem Lagerbolzen nach Fig. 6,
- Fig. 8:: eine perspektivische Darstellung des Lagerbolzens nach Fig. 5 gemäß einer Abwandlung,
- Fig. 9:: eine vergrößerte Darstellung einer Abdeckplatte zur Aufnahme von zwei Lagerbolzen gemäß der Abwandlung nach Fig. 8 mit Anpassung an minimales Stichmaß,
- Fig. 10:: eine vergrößerte Darstellung einer Abdeckplatte zur Aufnahme von zwei Lagerbolzen gemäß der Abwandlung nach Fig. 8 mit Anpassung an maximales Stichmaß und
- Fig. 11:: eine schematisierte Darstellung eines Fahrzeugsitzes.

In einem Kraftfahrzeug ist eine Verriegelungseinheit 10 zur Anbindung einer Rückenlehne 3 eines Fahrzeugsitzes 1, insbesondere eines Rücksitzes, an einer Fahrzeugstruktur vorgesehen. Die Rückenlehne 3 ist dabei von einer Gebrauchsstellung in eine Nichtgebrauchsstellung schwenkbar an einem Sitzteil 5 angebracht.

Die Verriegelungseinheit 10 ist aber auch an anderen Stellen einsetzbar, beispielsweise zur Befestigung des Sitzteils 5 des Fahrzeugsitzes 1 an der Bodenstruktur des Kraftfahrzeugs oder in einem Türschloss.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Verriegelungseinheit 10 weist ein Schlossgehäuse auf, welches eine Seitenplatte 16 und eine Abdeckplatte 18 umfasst. Die Grundflächen der Seitenplatte 16 und der Abdeckplatte 18 sind vorliegend flach ausgestaltet und in einer durch die Fahrtrichtung und die Vertikalrichtung definierten Ebene angeordnet, also senkrecht zur Querrichtung. Die Seitenplatte 16 umfasst zwei vorliegend kreisrund ausgeführte erste Lagerbohrungen 13. Die Abdeckplatte 18 umfasst zwei vorliegend kreisrund ausgeführte zweite Lagerbohrungen 14.

Die Seitenplatte 16 und die Abdeckplatte 18 bilden eine Aufnahmeöffnung aus, welche sich in Richtung eines Verriegelungsbolzens 12 öffnet, um diesen zum Verriegeln aufzunehmen. Dabei ist die Verriegelungseinheit 10 vorliegend an der Rückenlehne 3 und der Verriegelungsbolzen 12 an der Fahrzeugstruktur befestigt. Es ist auch denkbar, dass die Verriegelungseinheit 10 an der Fahrzeugstruktur und der Verriegelungsbolzen 12 an der Rückenlehne 3 befestigt ist. Der von der Aufnahmeöffnung aufzunehmende Abschnitt des Verriegelungsbolzens 12 verläuft in der Regel horizontal in Querrichtung.

Eine Drehfalle 20 ist auf einem ersten Lagerbolzen 51 schwenkbar gelagert, welcher wiederum an der Seitenplatte 16 und an der Abdeckplatte 18 befestigt ist. Die Drehfalle 20 weist dazu ein Drehfallenloch 24 auf, welches von dem ersten Lagerbolzen 51 durchragt wird. Die Drehfalle 20 weist ferner zum Zusammenwirken mit dem Verriegelungsbolzen 12 ein Hakenmaul 21 auf. Mittels einer ersten Feder 71 ist die Drehfalle 20 in Öffnungsrichtung vorgespannt.

Die Drehfalle 20 weist eine Funktionsfläche 22 auf, welche das Hakenmaul 21 teilweise seitlich begrenzt. Im verriegelten Zustand weist die Funktionsfläche 22 näherungsweise in Richtung eines zweiten Lagerbolzens 52, welcher parallel zu dem ersten Lagerbolzen 51 angeordnet ist und somit ebenfalls in Querrichtung verläuft. Die Funktionsfläche 22 ist vorliegend eben ausgebildet, kann aber beispielsweise auch kreisbogenförmig gekrümmt und konkav ausgebildet sein.

Auf der dem Drehfallenloch 24 abgewandten Seite des Hakenmauls 21, der Funktionsfläche 22 gegenüber liegend, ist das Hakenmaul 21 von einer Nase 28 der Drehfalle 20 seitlich begrenzt. Die Drehfalle 20 weist einen Grundkörper auf, welcher in axialer Richtung von je einer flachen Grundfläche begrenzt ist. Die Breite der Funktionsfläche 22 entspricht der Dicke des Grundkörpers der Drehfalle 20, also der Ausdehnung des Grundkörpers in axialer Richtung.

Der erste Lagerbolzen 51 ist in eine erste Lagerbohrung 13 der Seitenplatte 16 und in eine zweite Lagerbohrung 14 der Abdeckplatte 18 eingesetzt und steht von den Grundflächen der Seitenplatte 16 und der Abdeckplatte 18 senkrecht ab. Der erste Lagerbolzen 51 verläuft somit horizontal in Querrichtung. Der erste Lagerbolzen 51 weist eine Durchgangsöffnung 55 mit einem annähernd konstanten Innendurchmesser auf.

Auch der zweite Lagerbolzen 52 ist in je eine erste Lagerbohrung 13 der Seitenplatte 16 und in eine zweite Lagerbohrung 14 der Abdeckplatte 18 eingesetzt und steht von den Grundflächen der Seitenplatte 16 und der Abdeckplatte 18 senkrecht ab. Der zweite Lagerbolzen 52 verläuft somit ebenfalls horizontal in Querrichtung. Der zweite Lagerbolzen 52 weist, ebenso wie der erste Lagerbolzen 51, eine Durchgangsöffnung 55 mit einem annähernd konstanten Innendurchmesser auf.

Die Durchgangsöffnungen 55 der Lagerbolzen 51, 52 dienen dazu, ein Befestigungsmittel, beispielsweise eine Schraube, aufzunehmen, mittels dessen die Verriegelungseinheit 10 bei der Montage an der Rückenlehne 3 oder an einem anderen Strukturteil des Fahrzeugsitzes 1 oder des Fahrzeugs befestigt wird. Dazu werden die Schrauben in Befestigungsbohrungen in dem Strukturteil eingeschraubt. Der Abstand der Mittelachsen der Befestigungsbohrungen zueinander definiert ein Stichmaß des Strukturteils.

Vorliegend bestehen der erste Lagerbolzen 51 und der zweite Lagerbolzen 52 aus einem Metall, die Seitenplatte 16 besteht ebenfalls vorliegend aus einem Metall, und die Abdeckplatte 18 besteht vorliegend aus einem Kunststoff.

Auf dem zweiten Lagerbolzen 52 ist schwenkbar ein Spannelement 40 gelagert. Dazu weist das Spannelement 40 ein vorliegend kreisrundes Spannelementloch 44 auf, welches von dem zweiten Lagerbolzen 52 durchdrungen ist. Mittels einer dritten Feder 73 ist das Spannelement 40 zu der Drehfalle 20 hin vorgespannt.

Im verriegelten Zustand, wenn das Hakenmaul 21 der Drehfalle 20 den Verriegelungsbolzen 12 aufnimmt, übt das Spannelement 40 aufgrund der Vorspannung durch die dritte Feder 73 als Sicherungselement ein schließendes Moment auf die Drehfalle 20 aus. Dazu weist das Spannelement 40 eine exzentrisch zum zweiten Lagerbolzen 52 gekrümmte Spannfläche 41 auf, welche sich in nicht-selbsthemmendem Kontakt mit der Funktionsfläche 22 der Drehfalle 20 befindet. Die Spannfläche 41 ist vorliegend kreisbogenförmig gekrümmt und konvex ausgebildet.

Eine Rastklinke 30 ist auf dem zweiten Lagerbolzen 52 axial neben dem Spannelement 40 angeordnet und ebenfalls schwenkbar auf dem zweiten Lagerbolzen 52 gelagert, also mit dem Spannelement 40 fluchtend. Dazu weist die Rastklinke 30 ein vorliegend kreisrundes Rastklinkenloch 34 auf, welches von dem zweiten Lagerbolzen 52 durchdrungen ist. Mittels einer zweiten Feder 72 ist die Rastklinke 30 zu der Drehfalle 20 hin vorgespannt.

Die Rastklinke 30 ist vorliegend der Seitenplatte 16 benachbart angeordnet und das Spannelement 40 ist vorliegend der Abdeckplatte 18 benachbart angeordnet. Die Rastklinke 30 und das Spannelement 40 sind mit einem Leerweg auf Mitnahme gekoppelt, beispielsweise mittels einer Schlitz-Zapfen-Führung oder mittels eines axial abstehenden Mitnehmers.

Die Rastklinke 30 weist eine Rastfläche 31 auf, welche sich in Nachbarschaft zu der Spannfläche 41 des Spannelements 40 befindet. Im verriegelten Zustand ist die Rastfläche 31 beabstandet zu der Funktionsfläche 22 der Drehfalle 20 positioniert. Die Rastfläche 31 ist vorliegend kreisbogenförmig gekrümmt und konvex ausgebildet, kann aber auch eben sein.

Die Breite der Funktionsfläche 22, welche der Dicke des Grundkörpers der Drehfalle 20 entspricht, entspricht auch annähernd der Summe aus der Dicke der Rastklinke 30 und der Dicke des Spannelements 40. Die Drehfalle 20 weist also annähernd die gleiche Materialstärke auf wie die Rastklinke 30 und das Spannelement 40 zusammen.

Im verriegelten Zustand der Verriegelungseinheit 10 befindet sich der Verriegelungsbolzen 12 in der von der Seitenplatte 16 und der Abdeckplatte 18 gebildeten Aufnahmeöffnung und im Hakenmaul 21 der geschlossenen Drehfalle 20. Das Spannelement 40 sichert durch Zusammenwirken der Spannfläche 41 mit dem Nocken 26 die Drehfalle 20. Die Rastfläche 31 der Rastklinke 30 ist geringfügig von der Funktionsfläche 22 der Drehfalle 20 beabstandet.

Zum Öffnen der Verriegelungseinheit 10 wird die Rastklinke 30 von der Drehfalle 20 weg geschwenkt, wodurch sich die Rastfläche 31 der Rastklinke 30 weiter von der Funktionsfläche 22 der Drehfalle 20 entfernt. Die Rastklinke 30 nimmt das Spannelement 40 aufgrund der Mitnahmekopplung mit, so dass die Drehfalle 20 nicht länger gesichert ist.

Durch die Vorspannung aufgrund der ersten Feder 71 öffnet die Drehfalle 20, schwenkt also in Öffnungsrichtung. Alternativ oder zusätzlich zu der Vorspannung durch die erste Feder 71 kann die Drehfalle 20 zum Öffnen auch von der Rastklinke 30 oder von dem Spannelement 40 mitgenommen werden.

Aufgrund der Schwenkbewegung der Drehfalle 20 zieht sich das Hakenmaul 21 von der von der Seitenplatte 16 und der Abdeckplatte 18 gebildeten Aufnahmeöffnung zurück und gibt den Verriegelungsbolzen 12 frei, welcher sich entgegen der Einschwenkrichtung von der Verriegelungseinheit 10 entfernt. Hat der Verriegelungsbolzen 12 das Hakenmaul 12 verlassen, so befindet sich die Verriegelungseinheit 10 im entriegelten Zustand.

Gelangt in diesem entriegelten Zustand der Verriegelungsbolzen 12 wieder in die von der Seitenplatte 16 und der Abdeckplatte 18 gebildete Aufnahmeöffnung und in Anlage an den Rand des Hakenmauls 21, so drückt der Verriegelungsbolzen 12 die Drehfalle 20 in ihre geschlossene Stellung. Das Spannelement 40 bewegt sich aufgrund seiner Vorspannung durch die dritte Feder 73 entlang des Nockens 26. Von dem Spannelement 40 mitgenommen oder aufgrund der Vorspannung durch die zweite Feder 72 schwenkt die Rastklinke 30 auf die Drehfalle 20 zu, wobei sich die Rastfläche 31 der Funktionsfläche 22 der Drehfalle 20 nähert. Danach befindet sich die Verriegelungseinheit 10 wieder im verriegelten Zustand.

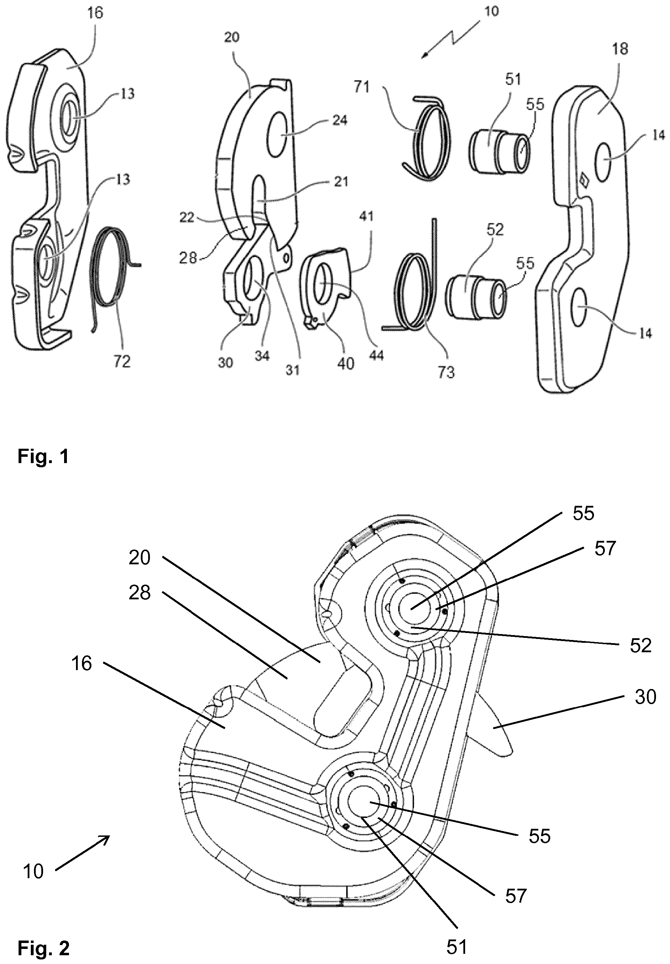

Bei der in Fig. 1 und Fig. 2 dargestellten Verriegelungseinheit 10 nach dem Stand der Technik weisen die Lagerbolzen 51, 52 außen in axialer Richtung eine zu ihrer Mittelachse rotationssymmetrische Kontur sowie in radialer Richtung zwei Stirnflächen 57 auf. Die zylindrische Durchgangsöffnung 55 liegt zentrisch in jedem der Lagerbolzen 51, 52. Die Mittelachse der Durchgangsöffnung 55 fluchtet also mit der Mittelachse des Lagerbolzens 51, 52. Die Stirnflächen 57 des Lagerbolzens 51, 52 haben jeweils die Form eines Kreisrings. Der Abstand der Mittelachsen des ersten Lagerbolzens 51 und des zweiten Lagerbolzens 52 zueinander entspricht dann dem Stichmaß des Strukturteils.

Bei der erfindungsgemäßen Verriegelungseinheit 10 weisen die Lagerbolzen 51, 52 ebenfalls außen eine zu ihrer Mittelachse, welche im Folgenden als Lagerachse 56 bezeichnet wird, zumindest annähernd rotationssymmetrische Kontur sowie zwei Stirnflächen 57 auf. Die zylindrische Durchgangsöffnung 55 liegt jedoch exzentrisch in jedem der Lagerbolzen 51, 52. Die Mittelachse der Durchgangsöffnung 55, welche im Folgenden als Durchgangsachse 53 bezeichnet wird, verläuft also parallel versetzt zu der Lagerachse 56 des Lagerbolzens 51, 52. Die Stirnflächen 57 des Lagerbolzens 51, 52 haben jeweils eine Form, welche von der Form eines Kreisrings abweicht.

Die Lagerachse 56 definiert eine axiale Richtung, welche vorliegend der Querrichtung entspricht.

Der Abstand der Durchgangsachse 53 der Durchgangsöffnung 55 des ersten Lagerbolzens 51 zu der Durchgangsachse 53 der Durchgangsöffnung 55 des zweiten Lagerbolzens 52 entspricht dem Stichmaß des Strukturteils.

Durch eine Drehung des ersten Lagerbolzes 51 und/oder des zweiten Lagerbolzens 52 um seine Lagerachse 56 relativ zu der Seitenplatte 16 sowie zu der Abdeckplatte 18 erfolgt auch eine Drehung der jeweiligen Durchgangsöffnung 55 um die Lagerachse 56 des jeweiligen Lagerbolzens 51, 52. Dabei verlagert sich auch die Durchgangsachse 53 der jeweiligen Durchgangsöffnung 55. Dadurch verändert sich der Abstand der Durchgangsachse 53 der Durchgangsöffnung 55 des ersten Lagerbolzens 51 zu der Durchgangsachse 53 der Durchgangsöffnung 55 des zweiten Lagerbolzens 52.

Durch eine Drehung des ersten Lagerbolzes 51 und/oder des zweiten Lagerbolzens 52 um seine Lagerachse 56 relativ zu der Seitenplatte 16 sowie zu der Abdeckplatte 18 ist der Abstand der Durchgangsachsen 53 der Durchgangsöffnungen 55 der Lagerbolzen 51, 52 zueinander änderbar. Dadurch ist eine Anpassung der Verriegelungseinheit 10 an unterschiedliche Stichmaße mehrerer Strukturteile möglich.

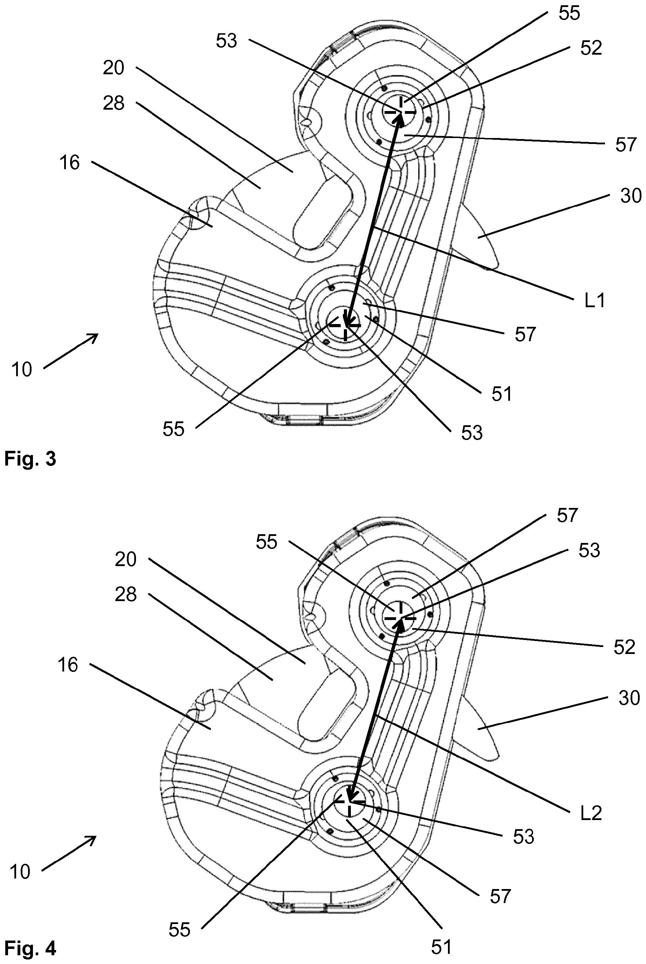

Bei der in Fig. 3 gezeigten Darstellung sind die Lagerbolzen 51, 52 derart gedreht, dass der Abstand der Durchgangsachsen 53 der Durchgangsöffnungen 55 zueinander maximal ist. Damit ist die Verriegelungseinheit an ein maximales Stichmaß L1 angepasst.

Die Durchgangsachse 53 der Durchgangsöffnung 55 des ersten Lagerbolzens 51 liegt dabei auf der dem zweiten Lagerbolzen 52 abgewandten Seite der Lagerachse 56 des ersten Lagerbolzens 51. Die Durchgangsachse 53 der Durchgangsöffnung 55 des zweiten Lagerbolzens 52 liegt dabei auf der dem ersten Lagerbolzen 51 abgewandten Seite der Lagerachse 56 des zweiten Lagerbolzens 52. Die Durchgangsachsen 53 der Durchgangsöffnungen 55 und die Lagerachsen 56 der Lagerbolzen 51, 52 liegen dabei in einer Ebene.

Bei der in Fig. 4 gezeigten Darstellung sind die Lagerbolzen 51, 52 derart gedreht, dass der Abstand der Durchgangsachsen 53 der Durchgangsöffnungen 55 zueinander minimal ist. Damit ist die Verriegelungseinheit an ein minimales Stichmaß L2 angepasst.

Die Durchgangsachse 53 der Durchgangsöffnung 55 des ersten Lagerbolzens 51 liegt dabei auf der dem zweiten Lagerbolzen 52 zugewandten Seite der Lagerachse 56 des ersten Lagerbolzens 51. Die Durchgangsachse 53 der Durchgangsöffnung 55 des zweiten Lagerbolzens 52 liegt dabei auf der dem ersten Lagerbolzen 51 zugewandten Seite der Lagerachse 56 des zweiten Lagerbolzens 52. Die Durchgangsachsen 53 der Durchgangsöffnungen 55 und die Lagerachse 56 der Lagerbolzen 51, 52 liegen dabei ebenfalls in einer Ebene.

Durch eine Drehung des ersten Lagerbolzes 51 und/oder des zweiten Lagerbolzens 52 um seine Lagerachse 56 ist somit eine stufenlose Anpassung der Verriegelungseinheit 10 an beliebige Stichmaße zwischen dem maximalen Stichmaß L1 und dem minimalen Stichmaß L2 möglich.

Bei der Fertigung der Verriegelungseinheit 10 werden die Lagerbolzen 51, 52 in dem Gehäuse der Verriegelungseinheit 10 positioniert und dabei in die ersten Lagerbohrungen 13 der Seitenplatte 16 und in die zweiten Lagerbohrungen 14 der Abdeckplatte 18 teilweise eingesetzt. Anschließend wird das erforderliche Stichmaß durch Drehung der Lagerbolzen 51, 52 um ihre Lagerachse 56 relativ zu der Seitenplatte 16 und der Abdeckplatte 18 eingestellt.

An mehreren, vorliegend je zwei Stellen am Rand der ersten Lagerbohrungen 13 sind Einpressbereiche 61 in der Seitenplatte 16 vorgesehen. Jeder Einpressbereich 61 hat die Gestalt einer annähernd halbkreisförmigen Ausnehmung aus dem Material der Seitenplatte 16, welche sich von dem Rand der ersten Lagerbohrung 13 radial nach außen erstreckt.

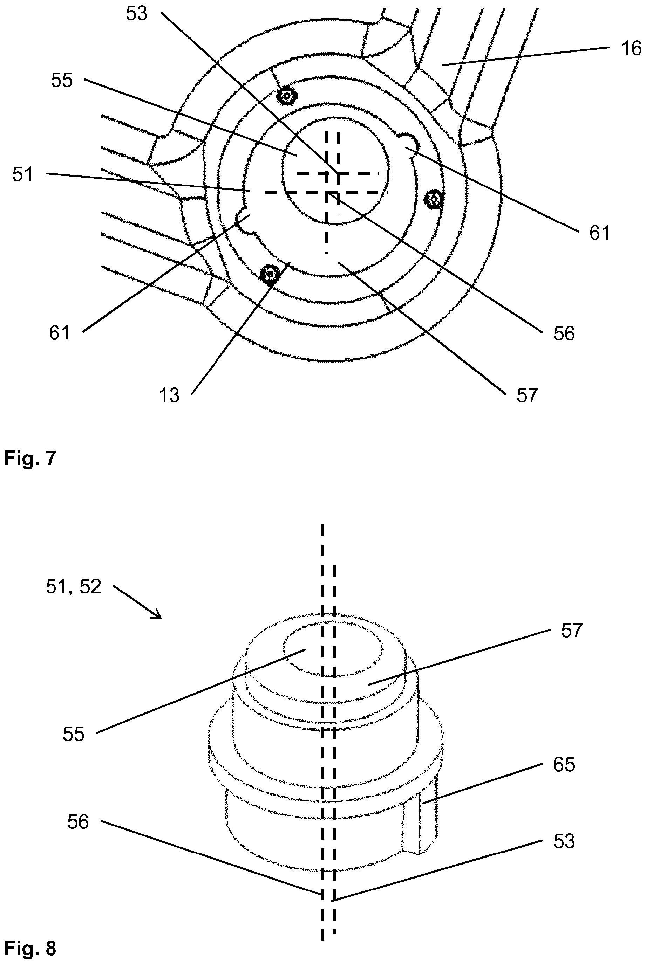

Mittels einer Verpressung werden die Lagerbolzen 51, 52 an dem Gehäuse der Verriegelungseinheit 10 befestigt. Dabei drückt ein entsprechender Stempel auf die Stirnseite 57 des Lagerbolzens 51, woraufhin Material des Lagerbolzens 51 in die Einpressbereiche 61 hinein fließt. Ein derart eingepresster erster Lagerbolzen 51 ist in Fig. 7 dargestellt. Dadurch ist der Lagerbolzen 51, 52 formschlüssig in der Seitenplatte 16 fixiert. Eine Drehung des Lagerbolzens 51, 52 um seine Lagerachse 56 ist damit verhindert. Damit ist ein festes Stichmaß an der Verriegelungseinheit 10 eingestellt.

Gemäß einer Abwandlung des Ausführungsbeispiels weist der Lagerbolzen 51, 52, wie in Fig. 8 dargestellt, an einem Teil seiner Außenfläche einen Zapfen 65 auf. Der Zapfen 65 hat eine annähernd quaderförmige Gestalt mit annähernd rechteckförmigem Querschnitt. Der Zapfen 65 erstreckt sich, beginnend an einer Stirnfläche 57, in axialer Richtung parallel zu der Lagerachse 56. In der Darstellung nach Fig. 8 liegt die besagte Stirnfläche 57 der sichtbaren Stirnfläche 57 gegenüber und ist nicht sichtbar.

Gemäß der Abwandlung des Ausführungsbeispiels ist an einer Stelle am Rand der zweiten Lagerbohrungen 14 je eine Nut 67 in der Abdeckplatte 18 vorgesehen. Jede Nut 67 hat die Gestalt einer annähernd rechteckförmigen Ausnehmung aus dem Material der Abdeckplatte 18, welche sich von dem Rand der zweiten Lagerbohrung 14 radial nach außen erstreckt.

Gemäß der Abwandlung des Ausführungsbeispiels werden bei der Fertigung der Verriegelungseinheit 10 die Lagerbolzen 51, 52 in dem Gehäuse der Verriegelungseinheit 10 positioniert, wobei die Zapfen 65 der Abdeckplatte 18 zugewandt sind. Dabei werden die Lagerbolzen 51, 52 in die ersten Lagerbohrungen 13 der Seitenplatte 16 und in die zweiten Lagerbohrungen 14 der Abdeckplatte 18 teilweise eingesetzt. Dabei werden die Lagerbolzen 51, 52 derart ausgerichtet, dass ihre Zapfen 65 jeweils in eine Nut 67 in der Abdeckplatte 18 eingreifen. Dadurch sind die Lagerbolzen 51, 52 formschlüssig in der Abdeckplatte 16 fixiert. Eine Drehung der Lagerbolzen 51, 52 um ihre Lagerachsen 56 ist damit verhindert. Damit ist ein festes Stichmaß an der Verriegelungseinheit 10 eingestellt.

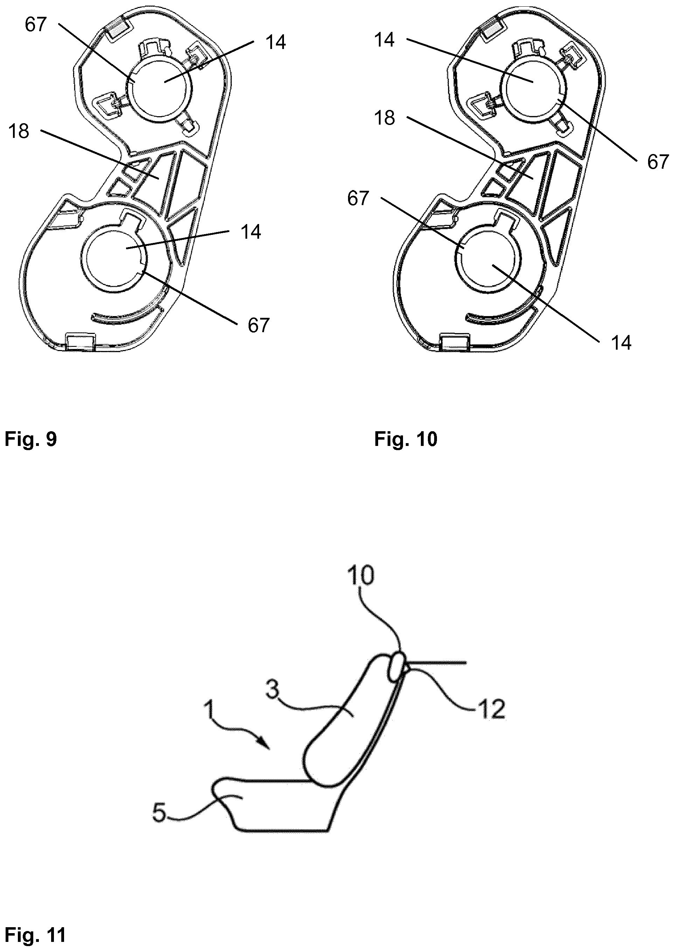

Gemäß der Abwandlung des Ausführungsbeispiels ist das erforderliche Stichmaß durch die Lage der Nuten 67 in der Abdeckplatte 18 vorgebbar. In Fig. 9 ist eine Abdeckplatte 18 für eine Verriegelungseinheit 10 mit minimalem Stichmaß dargestellt. In Fig. 10 ist eine Abdeckplatte 18 für eine Verriegelungseinheit 10 mit maximalem Stichmaß dargestellt. Für jedes erforderliche Stichmaß ist also eine spezielle Abdeckplatte 18 vorzusehen.

### Bezugszeichenliste

- 1: Fahrzeugsitz
- 3: Rückenlehne
- 5: Sitzteil
- 10: Verriegelungseinheit
- 12: Verriegelungsbolzen
- 13: erste Lagerbohrung
- 14: zweite Lagerbohrung
- 16: Seitenplatte
- 18: Abdeckplatte
- 20: Drehfalle
- 21: Hakenmaul
- 22: Funktionsfläche
- 24: Drehfallenloch
- 28: Nase
- 30: Rastklinke
- 31: Rastfläche
- 34: Rastklinkenloch
- 40: Spannelement
- 41: Spannfläche
- 44: Spannelementloch
- 51: erster Lagerbolzen
- 52: zweiter Lagerbolzen
- 53: Durchgangsachse
- 55: Durchgangsöffnung
- 56: Lagerachse
- 57: Stirnfläche
- 61: Einpressbereich
- 65: Zapfen
- 67: Nut
- 71: erste Feder
- 72: zweite Feder
- 73: dritte Feder
- L1: maximales Stichmaß
- L2: minimales Stichmaß

## Patentansprüche

1. Verriegelungseinheit (10) für einen Fahrzeugsitz (1), umfassend ein Gehäuse mit mindestens einer Seitenplatte (16) und vorzugsweise einer Abdeckplatte (18), sowie mindestens einen Lagerbolzen (51, 52) mit einer Lagerachse (56), welcher in axialer Richtung von einer Durchgangsöffnung (55) mit einer Durchgangsachse (53) durchdrungen ist, wobei die Durchgangsachse (53) der Durchgangsöffnung (55) versetzt zu der Lagerachse (56) des Lagerbolzens (51, 52) verläuft, wobei der Lagerbolzen (51, 52) in eine erste Lagerbohrung (13) der Seitenplatte (16) und vorzugsweise in eine zweite Lagerbohrung (14) der Abdeckplatte (18) eingesetzt ist,
**dadurch gekennzeichnet,**
**dass** die Seitenplatte (16) an dem Rand der ersten Lagerbohrung (13) mindestens einen Einpressbereich (61) aufweist, in welchen durch eine Verpressung Material des Lagerbolzens (51, 52) hinein fließt.

2. Verriegelungseinheit (10) nach Anspruch 1, **dadurch gekennzeichnet, dass** die Durchgangsachse (53) parallel zu der Lagerachse (56) verläuft.

3. Verriegelungseinheit (10) nach einem der vorstehenden Ansprüche, **dadurch gekennzeichnet, dass** der Lagerbolzen (51, 52) außen eine zu seiner Lagerachse (56) zumindest annähernd rotationssymmetrische Kontur aufweist.

4. Verriegelungseinheit (10) nach einem der vorstehenden Ansprüche, **dadurch gekennzeichnet, dass** die Durchgangsöffnung (55) eine zu ihrer Durchgangsachse (53) zumindest annähernd rotationssymmetrische Kontur aufweist.

5. Verriegelungseinheit (10) nach Anspruch 4, **dadurch gekennzeichnet, dass** die Durchgangsöffnung (55) eine kreiszylindrische Kontur aufweist.

6. Verriegelungseinheit (10) nach einem der vorstehenden Ansprüche, **dadurch gekennzeichnet, dass** die Seitenplatte (16) zumindest vorwiegend aus Metall besteht.

7. Verriegelungseinheit (10) nach einem der Ansprüche 1 bis 6, **dadurch gekennzeichnet, dass** die Seitenplatte (16) an dem Rand der ersten Lagerbohrung (13) eine Mehrzahl an Einpressbereichen (61) aufweist.

8. Verriegelungseinheit (10) nach Anspruch 7, **dadurch gekennzeichnet, dass** jeder Einpressbereich (61) den maximalen Abstand zum jeweiligen benachbarten Einpressbereich (61) aufweist.

9. Verriegelungseinheit (10) nach einem der Ansprüche 1 bis 8, **dadurch gekennzeichnet, dass** eine Mehrzahl an Einpressbereichen (61) entlang des Randes der ersten Lagerbohrung (13) gleichverteilt positioniert ist.

10. Verriegelungseinheit (10) nach einem der Ansprüche 1 bis 9, **dadurch gekennzeichnet, dass** die Abdeckplatte (18) zumindest vorwiegend aus Kunststoff besteht.

11. Verriegelungseinheit (10) nach einem der Ansprüche 1 bis 10, **dadurch gekennzeichnet, dass** die Abdeckplatte (18) an dem Rand der zweiten Lagerbohrung (14) mindestens eine Nut (67) aufweist, in welche ein Zapfen (65) des Lagerbolzens (51, 52) eingreift.

12. Fahrzeugsitz (1), umfassend mindestens eine Verriegelungseinheit (10) nach einem der vorstehenden Ansprüche.

## Claims

1. Locking unit (10) for a vehicle seat (1), comprising a housing with at least one side plate (16) and preferably with at least one cover plate (18), and at least one bearing bolt (51, 52) having a bearing axis (56) which, in the axial direction, is penetrated by a through-opening (55) having a through-axis (53), wherein the through-axis (53) of the through-opening (55) extends offset to the bearing axis (56) of the bearing bolt (51, 52), wherein the bearing bolt (51, 52) is inserted into a first bearing bore (13) of the side plate (16) and preferably into a second bearing bore (14) of the cover plate (18), **characterized in that** the side plate (16) on the edge of the first bearing bore (13) has at least one press-fit region (61), material of the bearing bolt (51, 52) passing therein by means of compression.

2. Locking unit (10) according to Claim 1, **characterized in that** the through-axis (53) extends parallel to the bearing axis (56).

3. Locking unit (10) according to one of the preceding claims, **characterized in that** the bearing bolt (51, 52) on the outside has a contour which is at least approximately rotationally symmetrical to its bearing axis (56).

4. Locking unit (10) according to one of the preceding claims, **characterized in that** the through-opening (55) has a contour which is at least approximately rotationally symmetrical to its through-axis (53).

5. Locking unit (10) according to Claim 4, **characterized in that** the through-opening (55) has a circular cylindrical contour.

6. Locking unit (10) according to one of the preceding claims, **characterized in that** the side plate (16) consists at least primarily of metal.

7. Locking unit (10) according to one of Claims 1 to 6, **characterized in that** the side plate (16) on the edge of the first bearing bore (13) has a plurality of press-fit regions (61).

8. Locking unit (10) according to Claim 7, **characterized in that** each press-fit region (61) has the maximum spacing from the respectively adjacent press-fit region (61).

9. Locking unit (10) according to one of Claims 1 to 8, **characterized in that** a plurality of press-fit regions (61) is uniformly distributed along the edge of the first bearing bore (13).

10. Locking unit (10) according to one of Claims 1 to 9, **characterized in that** the cover plate (18) consists at least primarily of plastics material.

11. Locking unit (10) according to one of Claims 1 to 10, **characterized in that** the cover plate (18) on the edge of the second bearing bore (14) has at least one groove (67), a stud (65) of the bearing bolt (51, 52) engaging therein.

12. Vehicle seat (1) comprising at least one locking unit (10) according to one of the preceding claims.

## Revendications

1. Unité de verrouillage (10) pour un siège de véhicule (1), comprenant un boîtier ayant au moins une plaque latérale (16) et de préférence une plaque de recouvrement (18), ainsi qu'au moins un boulon de palier (51, 52) avec un axe de palier (56) qui est traversé dans la direction axiale par une ouverture de passage (55) avec un axe de passage (53), l'axe de passage (53) de l'ouverture de passage (55) s'étendant de manière décalée par rapport à l'axe de palier (56) du boulon de palier (51, 52), le boulon de palier (51, 52) étant inséré dans un premier alésage de palier (13) de la plaque latérale (16) et de préférence dans un deuxième alésage de palier (14) de la plaque de recouvrement (18),
**caractérisée en ce que**
la plaque latérale (16) présente au niveau du bord du premier alésage de palier (13) au moins une région de pressage (61) dans laquelle, par pressage, s'écoule du matériau du boulon de palier (51, 52).

2. Unité de verrouillage (10) selon la revendication 1, **caractérisée en ce que** l'axe de passage (53) s'étend parallèlement à l'axe de palier (56).

3. Unité de verrouillage (10) selon l'une quelconque des revendications précédentes, **caractérisée en ce que** le boulon de palier (51, 52) présente à l'extérieur un contour au moins approximativement à symétrie de révolution par rapport à son axe de palier (56).

4. Unité de verrouillage (10) selon l'une quelconque des revendications précédentes, **caractérisée en ce que** l'ouverture de passage (55) présente un contour au moins approximativement à symétrie de révolution par rapport à son axe de passage (53).

5. Unité de verrouillage (10) selon la revendication 4, **caractérisée en ce que** l'ouverture de passage (55) présente un contour cylindrique circulaire.

6. Unité de verrouillage (10) selon l'une quelconque des revendications précédentes, **caractérisée en ce que** la plaque latérale (16) se compose au moins essentiellement de métal.

7. Unité de verrouillage (10) selon l'une quelconque des revendications 1 à 6, **caractérisée en ce que** la plaque latérale (16) présente, au niveau du bord du premier alésage de palier (13), une pluralité de régions de pressage (61).

8. Unité de verrouillage (10) selon la revendication 7, **caractérisée en ce que** chaque région de pressage (61) présente la distance maximale à la région de pressage adjacente respective (61).

9. Unité de verrouillage (10) selon l'une quelconque des revendications précédentes 1 à 8, **caractérisée en ce qu'**une pluralité de régions de pressage (61) sont positionnées de manière répartie uniformément le long du bord du premier alésage de palier (13).

10. Unité de verrouillage (10) selon l'une quelconque des revendications 1 à 9, **caractérisée en ce que** la plaque de recouvrement (18) se compose au moins essentiellement de plastique.

11. Unité de verrouillage (10) selon l'une quelconque des revendications 1 à 10, **caractérisée en ce que** la plaque de recouvrement (18) présente, au niveau du bord du deuxième alésage de palier (14), au moins une rainure (67) dans laquelle s'engage un tourillon (65) du boulon de palier (51, 52).

12. Siège de véhicule (1) comprenant au moins une unité de verrouillage (10) selon l'une quelconque des revendications précédentes.
